# EUROPEAN PATENT APPLICATION

(11) **EP 4 761 463 A1**
(43) Date of publication of application: **17.06.2026**
(21) Application number: 24290046.2
(22) Date of filing: 16.12.2024
(51) Int. Cl.: H05B 3/00, C03B 5/03, H05B 3/03, H05B 3/60

(54) **ELECTRICAL BOOSTER HEATING SYSTEM FOR A GLASS MELTING TANK**

(71) Applicant: SAINT-GOBAIN ISOVER, 92400 Courbevoie (FR)
(72) Inventor: CLAVREUL, Sylvain, 92400 Courbevoie (FR); GERVAIS, Joel, 92400 Courbevoie (FR); SAADE Jean-Paul, 92400 Courbevoie (FR)
(74) Representative: Kuhnen & Wacker Patent- und Rechtsanwaltsbüro PartG mbB

(57) **Abstract**

The invention pertains to an electrical booster heating system for a glass melting tank (2), the electrical booster heating system (1) comprising at least:
- at least one electrode set (R1/S1; S2/T2; R3/T3) comprising a first electrode device (E1/E2; E3/E4; E9/E1 0) and a second electrode device (E5/E6; E7/E8 E11/E12), both electrode devices (E1/E2; E3/E4; E9/E10; E5/E6; E7/E8 E11/E12) being assigned to a phase (R,S,T) of an electrical power supply (Q1,Q2,Q3)
- the electrode devices (E1/E2; E3/E4; E9/E10; E5/E6; E7/E8 E11/E12) each pass through a peripheral boundary wall (3; 4) of the glass melting tank (2) and, during operation of the glass melting tank (2), are surrounded by a glass melt (28) present in an interior (2A) of the glass melting tank (2) with a first, tank-inner-side free end (20) of the electrode device (E1/E2; E3/E4; E9/E10;E5/E6; E7/E8 E11/E12) and are connected to the power supply (Q1,Q2,Q3) with a tank-outer-side end (21),
- the glass melt (28) connects the free ends (20), on the inside of the tank, of the first and second electrode devices (E1/E2; E3/E4; E9/E10; E5/E6; E7/E8 E11/E12) in an electrically conductive manner to form an electric circuit,
characterized in that
each electrode device (E1/E2; E3/E4; E9/E10;E5/E6; E7/E8 E11/E12) is formed from an at least electrically paired arrangement of at least two individual electrodes (E1 to E12), wherein, to form the electrically paired arrangement of the two individual electrodes (E1 to E12) of the respective electrode devices (E1/E2; E3/E4; E9/E10; E5/E6; E7/E8 E11/E12), the two individual electrodes (E1 to E12) of the electrode device (E1/E2; E3/E4; E9/E10; E5/E6; E7/E8 E11/E12) have the same electrical potential.

## Description

The invention relates to an electrical booster heating system for a glass melting tank according to the preamble of claim 1.

Such electrical booster heating systems for operating a glass melting tank are known. Usually, a glass melt in a glass melting tank, for example, is first liquefied and then kept in the liquid, i.e. molten, state by means of a gas firing, which heats the surface of the glass melt. The glass melting tank is a tank-like body made of highly fireproof materials with a floor and boundary walls. Usually, the glass melting tank is of a rectangular shape when viewed from above, with two longitudinal side walls and two side walls. Fresh, still solid, unmelted glass raw material is fed into the glass melting tank in the area of one side wall. Molten glass is removed from the opposite side wall, creating a material flow along the longitudinal direction of the glass melting tank.

A well-known electrical booster heating system is designed in such a way that electrodes, for example molybdenum electrodes, are arranged to penetrate the boundary walls of the glass melting tank in such a way that their free ends on the inside of the tank are completely surrounded by the glass melt. One end of each electrode on the outside of the tank is connected to a power supply. Two individual electrodes are connected to a power source. Since glass becomes electrically conductive when molten, the current can flow from one individual electrode through the melt to the other individual electrode, thereby forming a closed electric circuit. The current flow through the glass melt causes the glass melt to heat up, creating a heating effect to heat the glass melt.

The circuits described above are usually connected to an alternating current source and supplied with electrical energy via this source. The alternating current source can be, for example, a single-phase transformer or a multi-phase transformer. The phases have a phase displacement PV relative to each other.

The advantage of such electrical booster heating systems is that they transfer heat to the glass melt. In addition, an electrical booster heating system can reduce the carbon dioxide emissions of a corresponding glass melting tank, as it arises from the combustion of fossil fuels.

Another advantage of using such electrical booster heating systems is that a heat focus is created in the glass melt at a lower level than the surface of the glass melt, causing a convection current to form within the glass melt and thus improving the mixing of colder and warmer glass melt areas.

The electrode material used and the electrodes themselves are subject to considerable wear due to oxidation/corrosion at high temperatures. The boundary wall of a glass melting tank can also be subject to particularly corrosive wear in the area of the electrodes, for example if the melt is particularly hot in the area of the electrodes.

The object of the invention is therefore to provide an electrical booster heating system for a glass melting tank, in which in particular corrosive wear of the boundary walls of the glass melting tank are minimized. Furthermore, the object of the invention is to convert the electrical energy used as completely as possible into heat energy in the glass melt. Side currents, which for example take place in the masonry of the boundary wall in the glass melting tank, are to be minimized. Such shunt currents occur because the brickwork of the glass melting tank boundary walls, which is made of high-temperature-resistant materials, becomes electrically conductive at very high temperatures, which originate from the direct contact of the high-temperature-resistant materials with the melting resp., molten glass. These secondary currents do not contribute to the heating of the glass melt, or only to an insignificant extent, and on the one hand promote the undesired corrosion within the boundary walling.

These tasks are solved with an electrical booster heating system for a glass melting tank with the features of the main claim. Advantageous embodiments are given in the sub-claims.

An electrical booster heating system for a glass melting tank according to the invention, comprises at least:
- at least one electrode set comprising a first electrode device and a second electrode device, both electrode devices being assigned to a phase of an electrical power supply
- the electrode devices each pass through a peripheral boundary wall of the glass melting tank and, during operation of the glass melting tank, are surrounded by a glass melt present in an interior of the glass melting tank with a first, tank-inner-side free end of the electrode device and are connected to the power supply with a tank-outer-side end,
- the glass melt connects the free ends, on the inside of the tank, of the first and second electrode devices in an electrically conductive manner to form an electric circuit,
Whereas each electrode device is formed from an at least electrically paired arrangement of at least two individual electrodes, wherein, to form the electrically paired arrangement of the two individual electrodes of the respective electrode devices, the two individual electrodes of the electrode device have the same electrical potential.

The at least two individual electrodes of the electrode device having the same electrical potential means, that these individual electrodes have a relatively close, ideally identical voltage.

According to the invention, it was found that the corrosive wear of the electrodes is significantly reduced when using at least one single electrode pair arranged electrically in pairs. This is attributed to the higher available transmission surface for electrical energy between the electrode surfaces and the glass melt. In this respect, there is a lower current density in amperes per unit area. In addition, the introduction of electrical energy via individual electrodes arranged in pairs is advantageous with regard to the formation of local heat peaks, since the available electrical energy is introduced into the electrically conductive glass melt at two points, i.e. separately from each other. This also has the consequence that adjacent wall structures of boundary walls in the immediate vicinity of the electrodes are less heat-stressed and thus exhibit less local wear.

In a preferred embodiment the at least two individual electrodes of one of the electrode devices are spatially arranged in pairs.

In addition to the electrical pairing of electrodes, it may also be useful to spatially pair individual electrodes of an electrode device. This means that individual electrodes of the electrode devices are spatially relatively close to each other and thus also spatially form double electrodes, which are closer to each other than a distance to individual electrodes of neighboring electrode devices.

With a further preferred embodiment, the first electrode device of the at least one electrode set is arranged so as to pass through a first boundary wall of the glass melting tank and the second electrode device of the at least one electrode set is arranged so as to pass through another, second boundary wall of the glass melting tank.

In this measure, it is particularly advantageous that a relatively large distance is realized between the electrically paired electrodes of the two electrode devices of an electrode set, in particular also an "across the corner" course of the boundary wall of the glass melting tank, so that a relatively long path is formed for possible side currents through the boundary walls, which reduces the current flow through these boundary walls.

In a further embodiment of the invention the first boundary wall is a longitudinal wall of the glass melting tank and the second boundary wall is a side wall of the glass melting tank or the first boundary wall and the second boundary wall are opposite longitudinal walls of the glass melting tank.

These arrangements allow long current flow paths through the glass melt, so that wear on the melting tank walls is reduced. In addition, the electrical energy input of an electrode device in two adjacent walls leading across the corner or in two opposite walls is minimized.

In a further embodiment of the invention for the purpose of spatial arranging the individual electrodes in pairs, the individual electrodes are at a closer distance A1 from one another than is the distance A2 of each of the individual electrodes from adjacent electrodes of further electrode arrangements of one or more further electrode sets.

This arrangement realizes not only the electrical pairing of individual electrodes of one of the electrode devices, but also their spatial pairing. Advantageously at least three electrode sets are present, which are each connected to a specific phase of the power supply. This makes it possible to connect one phase with one set of electrodes and thus realize three flow paths through the melt in a three-phase alternating current supply phased by 120° being industry standard

In a further embodiment of the invention the phases of the three electrode sets have a phase shift of 60° or 120° with respect to one another. The advantage of the 120° phase shift is a balanced power distribution. A 60° phase shift is less preferred, as it leads to an unbalanced power distribution.

In a preferred embodiment the transformers are designed as single-phase transformers. Alternatively, a three-phase transformer may be used.

With a further embodiment of the invention in the spatial pairwise arrangement of two individual electrodes, their center axes have a distance of at least 100 mm to at most 1500 mm, preferably less than 400 mm, in the plan view of the glass melting tank.

For the usual sizes of glass melting tanks, which, for example, can have a capacity of up to 150 t tons of glass melt per day, the above-mentioned minimum distances and the above-mentioned maximum distances are held to be advantageous for the spatial arrangement of the individual electrodes of an electrode device in pairs. They represent a good compromise between the effort required to install supply lines outside the glass melting tank and the optimized wear behavior of the individual electrodes and the optimized wear of the tank.

In a further embodiment of the invention at least one electrode device of a further electrode set is arranged along a course of the boundary wall of the glass melting tank between two electrode devices of one of the electrode sets.

This type of arrangement generally allows current paths to form within the glass melt, which may cross when looking at the glass melting tank from above. This enables the glass melt to be heated particularly effectively due to the relatively long current paths.

With a further embodiment of the invention in a plan view, a geometrically shortest possible current path through the glass melt, which is formed by the electrode device of one of the electrode sets, the electrode devices of which are arranged vis-a-vis on one of the side walls and on one of the longitudinal walls of the glass melting tank, crosses a longitudinal center plane or a transverse center plane of the glass melting tank.

With such an arrangement, relatively long current paths are advantageously achieved in the glass melt, whereby a high degree of the electrical energy used is transferred to the glass melt in the form of heat energy. This increases the effectiveness of the electrical booster heating system. Furthermore, with two sets of electrodes, the electrode devices of which are each arranged across a corner so that the current path in the glass melt passes through the center of the glass melting tank, a crossed arrangement of the current paths of two sets of electrodes is possible. This also makes it possible to heat the glass melt particularly effectively and to make a greater distance in the tank walls between the two pairs of electrodes of the same set of electrodes for that the current will prefer to pass in the glass melt rather than in the tank walls.

In a further embodiment of the invention the power supplies for the sets of electrodes are in each case single-phase transformers.

Single-phase transformers are a cost-effective design for the electrical power typically required for electrical booster heating systems, which can range from several tens of kilowatts to several hundreds of kilowatts. They also make it easier to replace a single single-phase transformer than an arrangement with a three-phase transformer. They also allow the easier control of a specific set of electrodes in order to optimize the temperatures in the glass melt.

In a further embodiment of the invention at least one of the individual pair electrodes of one of the further electrode sets is arranged along the boundary wall of the glass melting tank, between two individual electrodes of one of the electrode devices of one of the electrode sets.

An electrical pairing of individual electrodes of an electrode device also means that between two individual electrodes of such an electrically paired electrode device, one or more individual electrodes of other electrode devices, which are connected to a different phase of the electrical power supply, for example, are arranged. This allows the current flow paths in the melt to be adapted particularly flexibly.

In a further embodiment of the invention the individual electrodes of one of the electrode devices are arranged at different heights, as viewed in a vertical direction), and offset from one another by a horizontal distance A_{H}, as viewed in a horizontal direction H, and in particular arranged one above the other in alignment, as viewed in the vertical direction V.

This provides an alternative arrangement of individual electrodes of an electrode device. For example, depending on the type or grade of glass to be melted and depending on the type of vertical heat distribution within the glass melt, it may be useful to have vertically different mounting heights for the individual electrodes or vertically different mounting heights for electrode devices. The lowest possible arrangement is limited by the undesirable heat effects on the bottom of the glass melting tank. At the top, falling below a minimum distance to the surface of the glass melt bath may create an unwanted heat hotspot just below the surface of the glass melt, which may be undesirable. Nevertheless, it may make sense to arrange the electrodes of individual electrode devices at different vertical heights or at a vertical distance VH in order to be able to specifically influence convection currents within the glass melt if necessary.

In a further embodiment of the invention the individual electrodes of one of the electrode devices are arranged at the same height, as seen in the vertical direction V.

With regard to the constructional measures and with regard to the constructive measures, which are necessary in order to be able to arrange the electrodes through the wall of the glass melting tub, an arrangement at the same vertical height may produce the least possible expenditure.

According to a preferred embodiment individual electrodes or electrode devices that are located adjacent to each other and that are member of different electric circuits are connected via the transformers (9) to the same phase (R, S, T) of the power grid plant.

As a result, individual electrodes or electrode devices of different circuits, that are located close to each other, e.g. that pass through the same tank wall have nearly the same electrical potential level thus avoiding almost any unwanted current flow along the tank wall between different circuits.

In the following, the invention is explained by means of the drawing as an example.
Figure 1: a schematic view of an electrical booster heating system for a glass melting tank, in the boundary walls of which a total of three sets of electrodes are inserted, each with two electrode devices, which in turn each have two individual electrodes. Two electrode devices are assigned to a phase R, one to a phase S and one to a phase T;
Figure 2: the arrangement according to Figure 1 with a schematic representation of a current flow scheme of the electrical booster heating system to an electrical power supply;
Figure 3: a representation of the electrical booster heating system in the embodiment according to Figure 1 with a modified current flow scheme;
Figure 4: a representation of the electrical booster heating system in the embodiment according to Figure 1 with a further modified current flow scheme;

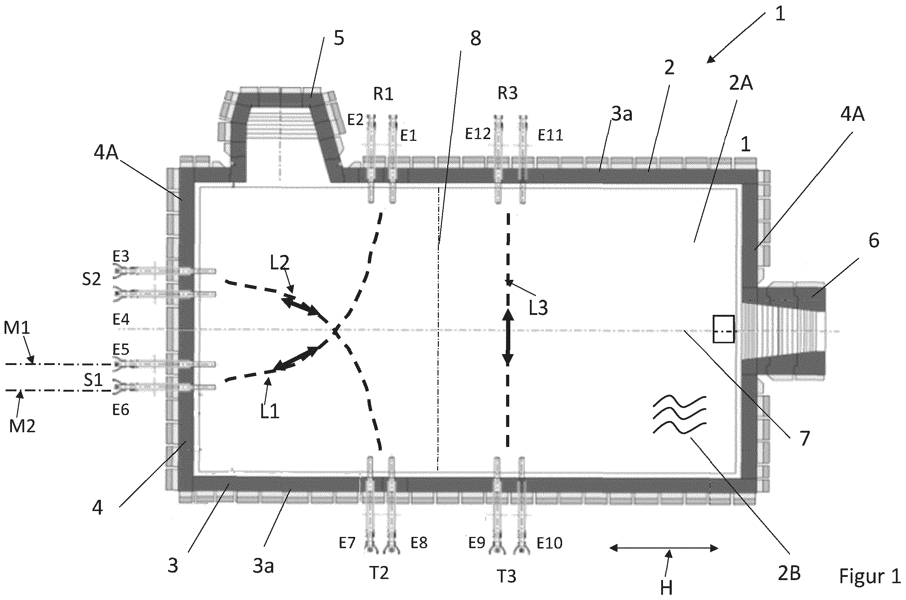

An electrical booster heating system 1 for a glass melting tank 2 according to the invention is shown in Figure 1 in an exemplary embodiment. The glass melting tank 2 is shown in Figure 1 in a plan view. The glass melting tank 2 is bounded by first boundary walls 3, which are, for example, a longitudinal wall 3A, and by second boundary walls 4, which are, for example, side walls 4A. The glass melting tank 2 has an interior space 2A in which liquid glass melt 2B is stored. Glass raw material is fed into the glass melting tank 2 in a so-called "doghouse" 5. The glass melt 2B can be removed from the glass melting tank 2 for further processing at a melt outlet 6. A plurality of gas burners (not shown) are present, which introduce thermal energy into the glass melt 2B via a surface of the glass melt 2B.

The glass melting tank 2 usually has a longitudinal center plane 7 and a transverse center plane 8.

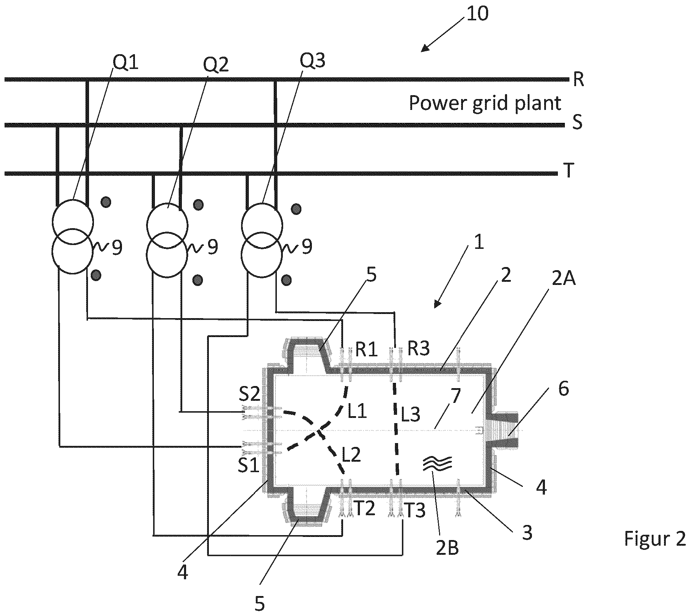

In the present embodiment, the electrical booster heating system 1 is formed from three sets of electrodes R1/S1; S2/T2; R3/T3. The set of electrodes R1/S1 is assigned to a first current source Q1 (see Figure 2) and is electrically connected to it. The set of electrodes S2/T2 is assigned to a second current source Q2 (see Figure 2) and is electrically connected to it. The third electrode set R3/T3 is assigned to a third current source Q3 and electrically connected to it.

The current sources Q1, Q2, Q3 are each designed as single-phase transformers 9, which - as shown in Figure 2 - are exemplarily connected to phases R, S, T of an external energy supply 10. An exemplary electrical connection diagram of three electrode sets R1/S1, S2/T2 and R3/T3, each comprising two electrode devices E1/E2; E3/E4; E5/E6; E 7/E8; E9/E10; E11/E12, each consisting of two individual electrodes E1 to E12, is shown in Figure 2.

The first electrode set R1/S1 comprises two electrode devices E1/E2; E5/E6. The second electrode set S2/T2 comprises two electrode devices E3/E4 and E7/E8. The third electrode set R3/T3 comprises two electrode devices E9/E10; E11/E12.

Each electrode device E1/E2; E3/E4; E5/E6; E7/E8; E9/E10; E11/E12 has two individual electrodes E 1, E2, E3, E4, E5, E6, E7, E8, E9, E10, E11, E12, which in the present example are of identical design. The individual electrodes E1 to E12 each have a first free end 20 on the inside of the tank and a second end 21 on the outside of the tank. All the inner ends 20 of the individual electrodes E1 to E12 project into the glass melt 2A and are completely surrounded by it. The outer ends 21 of all the individual electrodes E1 to E12 are adapted and configured for an electrical connection to the respectively assigned electrical power sources Q1, Q2, Q3.

Two individual electrodes E1, E2, E3, E4, E5, E6, E7, E8, E9, E10, E11, E12 of the electrode devices E1/E2; E3/E4; E5 /E6, E7/E8, E9/E10, E11/E12 are electrically arranged in pairs, whereby an electrical arrangement in pairs is to be understood to mean that in each case two of the individual electrodes E1 to E12 are at the same electrical potential by being connected to the same output phase of the same transformer. In each case two individual electrodes E1 to E12 are thus connected in parallel to each other.

The individual electrodes E1 to E12 are, for example, molybdenum individual electrodes. Between the individual electrodes E1 to E12 of an electrode set R1/S1; S2/T2; R3/T3, current paths L1, L2, L3 are formed through the glass melt 2B. For example, the electrode set R1/S1 forms the current path L1 through the glass melt 2B. The electrode set S2/T2 forms the current path L2. The electrode set R3/T3 forms the current path L3.

The electrode devices E1/E2; E3/E4; E5/E6, E7/E8, E9/E10, E11/E12 of an electrode set R1/S1; S2/T2; R3/T3 can alternatively be arranged in one of the longitudinal walls 3A and the side walls 4A. Furthermore, these can be arranged in opposite longitudinal walls 3A. It is even possible to arrange the electrode devices of an electrode set R1/S1; S2/T2; R3/T3 in opposite side walls 4A.

In each case, the liquid glass melt 2B being a electrically conductive material in the molten state closes the circuit between the respective individual electrodes E1 to E12 and between the electrode devices E1/E2; E3/E4; E5/E6, E7/E8, E9/E10, E11/E12. This is possible because the glass melt 2B is electrically conductive at the temperatures present in such a way that a current flow takes place along the current paths L1, L2, L3. This current flow through the glass melt 2B causes the glass melt 2B to heat up, thereby realizing the electrical booster heating system 1.

In addition to the electrical arrangement of the individual electrodes E1 to E12 in pairs, it is also recommended to arrange the individual electrodes E1 to E12 of the electrode devices E1/E2, E3/E4, E5/E6, E7/E8, E9/E10 and/or E11/E12 spatially in pairs.

In the context of the invention, a spatial pair arrangement means that between two individual electrodes E1 to E12 of a particular electrode device E1/E2, E3/E4, E5/E6, E7/E8, E9/ E10, E11/E12, no single electrodes of another electrode device E1/E2, E3/E4, E5/E6, E7/E8, E9/E10, E11/E12 are arranged. In other words, this means that individual electrodes E1 to E12 of a particular electrode device E1/E2, E3/E4, E5/E6, E7/E8, E9/E10, E11/E12 are arranged directly adjacent to one another.

A spatial arrangement of the individual electrodes E1 to E12 in pairs is also to be understood as an arrangement in which the center axes M1, M2 of the individual electrodes E1 to E12 have a maximum horizontal distance A_{H} in a horizontal direction H of at most 2000 mm, in particular a maximum distance A_{H} of at most 1500 mm from one another.

A minimum horizontal distance A_{H} results in particular from a thickness of the electrodes E1 to E12, which are arranged next to one another, and is usually at least 100 mm.

In the embodiment according to Figure 1, the current paths L1, L2 and L3 are designed in such a way that they at least cross the longitudinal center plane 7 of the glass melting tank 2. With regard to the current paths L1 and L2, for example, this leads to a current path configuration that crosses in the plan view.

A current path of the current paths L1 and L2 such that they cross or such that they each intersect the longitudinal center plane 7 of the glass melting tank 2 has the advantage that a corresponding section between the electrode devices E1/E2; E5/E6 and E3/E 4; E7/E8 along the boundary walls 3, 4 of the glass melting tank 2 is particularly long, so that the resulting electrical resistance, which a current flow along the boundary walls 3, 4 must overcome, is high despite the conductivity of the high-temperature ceramics from which the glass melting tank is built. Accordingly, leakage currents through the boundary walls 3, 4 are low. However, wear due to corrosion/oxidation in the boundary walls 3, 4, in particular at the transition from the current-carrying individual electrodes E1 to E12 to the masonry of the boundary walls 3, 4, can be minimized. In addition, the heating efficiency of the electrical booster heating system 1 is increased because a larger proportion of the available electrical energy flows through the glass melt 2B and ensures that it is heated.

Further, black dots besides the transformers 9 show which one of the secondary winding connections is phase synchronous to which one of the primary winding connections. According to the example of Figure 2 the electrode device R3 of the circuit comprising the current flow path L3 sitting adjacent to the electrode device R1 of the circuit comprising L1 are passing through the same tank wall and both are connected via their respective transformers 9 to the same phase R of the power grid plant. Accordingly, the electrode sets S1 and S2 both are connected to the phase S and the electrode devices T2 and T3 both are connected to the phase T. Consequently, besides of neglectable amounts of potential differences between those electrode devices E1/E2; E3/E4; E5/E6, E7/E8, E9/E10, E11/E12, all the electrode devices E1/E2; E3/E4; E5/E6, E7/E8, E9/E10, E11/E12 sharing the same tank wall (side wall 4A or longitudinal wall 3A) are connected to the same phase, thereby minimizing leakage current between the circuits.

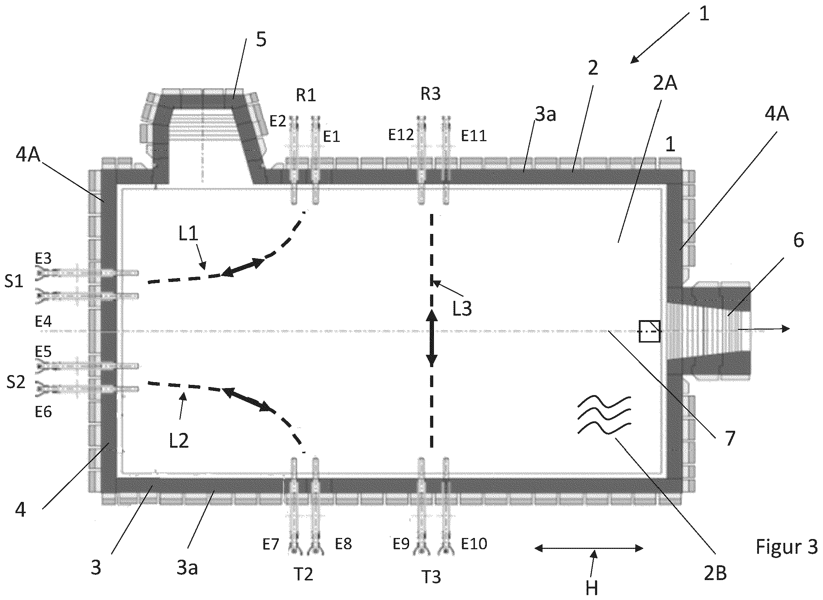

Figure 3 shows a modified connection diagram of three electrode sets R1/S1, S2/T2 and R3/T3 compared to the electrical current flow scheme of the embodiment according to Figures 1 and 2.

In this type of connection, the current path L1 and the current path L2 do not cross the longitudinal center plane 7 of the glass melting tank 2. The associated electrode devices E1/E2; E3/E4 and E5/E6; E7/E8 are each arranged vis-a-vis in a longitudinal wall 3A and in a side wall 4A. Such an electrical wiring of the electrode devices realizes the inventive idea of the at least electrically paired arrangement of individual electrodes, which are also spatially arranged in pairs in the sense defined above.

Compared to the embodiment according to Figure 1, non-intersecting current flow paths L1 and L2 are less favorable than intersecting current flow paths in terms of tank corrosion. However, the non intersecting current flow paths may be more favorable in terms of transformers coupling, meaning that if L1 and L2 don't cross transformer 1 would be less coupled with transformer 2. For example, if transformer 1 is off or adjusted to a low power for any reason, it will be less influenced from transformer 2 that for example is adjusted to high power.

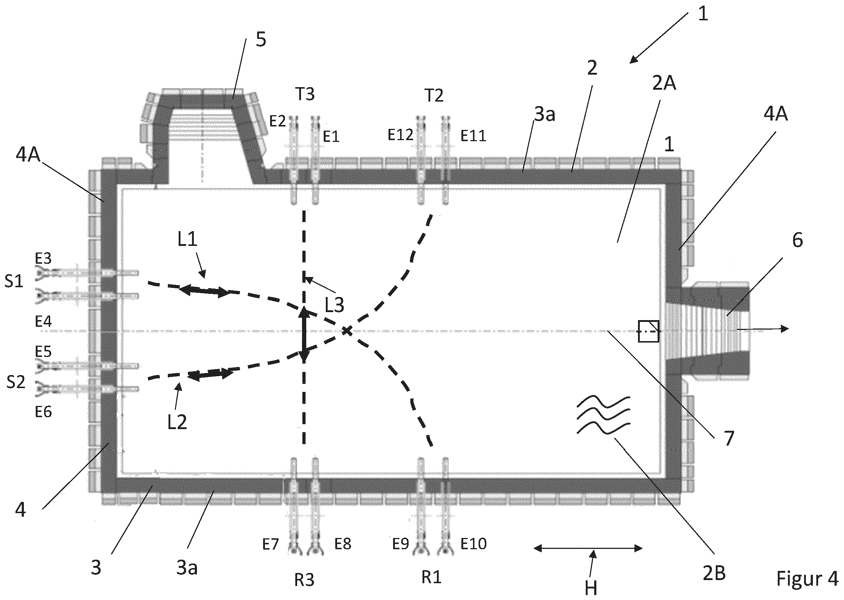

Figure 4 shows a further possible connection scheme for the electrode devices E1/E2, E3/E4, E5/E6, E7/E8, E90/E10 and E11/E12. In this embodiment, the electrode devices E3/E4 and E9/E10 form an electrode set S1/T1 and thus the current path L1. Furthermore, the electrode devices E5/E6 and E11/E12 form an electrode set S2/T2 and the current path L2. Finally, electrode devices E1/E2 and E7/E8 form an electrode set S3/T3 and current path L3.

This arrangement ensures that all current paths of L1, L2 and L3 cross each other. It is very advantageous in terms of tank corrosion.

### List of reference numbers

- 1: electrical booster heating system
- 2: glass melting tank
- 2A: interior
- 2B: glass melt
- 3: first boundary wall
- 3A: longitudinal wall
- 4: second boundary wall
- 4A: side wall
- 5: doghouse
- 6: melt outlet
- 7: longitudinal center plane
- 8: transverse center plane
- 9: transformer
- 10: energy source
- 20: first free end inside the tank
- 21: end on the outside of the tank
- 23: center axis
- R1/S1; S2/T2; R3/T3: electrode set
- E1/E2; E3/E4; E9/E10: first electrode device
- E5/E6; E7/E8 E11/E12: second electrode device
- Q1, Q 2, Q3: electric power supply
- E1, E2, E3, E4, E5, E6,: individual electrodes
- E7, L8, E9, E10, E12: individual electrodes
- A1: distance
- A2: distance
- PV: phase displacement
- L1, L2, L3: current flow path
- V: vertical direction
- H: horizontal direction
- A_{H}: horizontal distance

## Claims

1. Electrical booster heating system for a glass melting tank (2), the electrical booster heating system (1) comprising at least:
- at least one electrode set (R1/S1; S2/T2; R3/T3) comprising a first electrode device (E1/E2; E3/E4; E9/E10) and a second electrode device (E5/E6; E7/E8 E11/E12), both electrode devices (E1/E2; E3/E4; E9/E10; E5/E6; E7/E8 E11/E12) being assigned to a phase (R,S,T) of an electrical power supply (Q1,Q2,Q3)
- the electrode devices (E1/E2; E3/E4; E9/E10; E5/E6; E7/E8 E11/E12) each pass through a peripheral boundary wall (3; 4) of the glass melting tank (2) and, during operation of the glass melting tank (2), are surrounded by a glass melt (2B) present in an interior (2A) of the glass melting tank (2) with a first, tank-inner-side free end (20) of the electrode device (E1/E2; E3/E4; E9/E10; E5/E6; E7/E8 E11/E12) and are connected to the power supply (Q1,Q2,Q3) with a tank-outer-side end (21),
- the glass melt (2B) connects the free ends (20), on the inside of the tank, of the first and second electrode devices (E1/E2; E3/E4; E9/E10; E5/E6; E7/E8 E11/E12) in an electrically conductive manner to form an electric circuit,
**characterized in that**
each electrode device (E1/E2; E3/E4; E9/E10; E5/E6; E7/E8 E11/E12) is formed from an at least electrically paired arrangement of at least two individual electrodes (E1 to E12), wherein, to form the electrically paired arrangement of the two individual electrodes (E1 to E12) of the respective electrode devices (E1/E2; E3/E4; E9/E10; E5/E6; E7/E8 E11/E12), the two individual electrodes (E1 to E12) of the electrode device (E1/E2; E3/E4; E9/E10; E5/E6; E7/E8 E11/E12) have the same electrical potential.

2. Electrical booster heating system according to claim 1, **characterized in that** the at least two individual electrodes (E1 to E12) of one of the electrode devices (E1/E2; E3/E4; E9/E10; E5/E6; E7/E8 E11/E12) are spatially arranged in pairs.

3. Electrical booster heating system according to claim 1 or 2, **characterized in that** the first electrode device (E1/E2; E3/E4; E9/E10) of the at least one electrode set (R1/S1; S2/T2; R3/T3) is arranged so as to pass through a first boundary wall (3) of the glass melting tank (2) and the second electrode device (E5/E6; E7/E8 E11/E12) of the at least one electrode set (R1/S1; S2/T2; R3/T3) is arranged so as to pass through another, second boundary wall (4) of the glass melting tank (2).

4. Electrical booster heating system according to claim 3, **characterized in that** the first boundary wall (3) is a longitudinal wall (3A) of the glass melting tank (2) and the second boundary wall (4) is a side wall (4A) of the glass melting tank (2) or the first boundary wall (3) and the second boundary wall (4) are opposite longitudinal walls (3A) of the glass melting tank (2).

5. Electrical booster heating system according to one of the preceding claims, **characterized in that**, for the purpose of spatial arranging the individual electrodes (E1 to E12) in pairs, the individual electrodes (E1 to E12) are at a closer distance (A1) from one another than is the distance (A2) of each of the individual electrodes (E1 to E12) from adjacent individual electrodes (E1 to E12) of further electrode devices (E1/E2; E3/E4; E9/E10; E5/E6; E7/E8 E11/E12) of one or more further electrode sets (R1/S1; S2/T2; R3/T3).

6. Electrical booster heating system according to one of the preceding claims, **characterized in that** at least three electrode sets (R1/S1; S2/T2; R3/T3) are present, which are each connected to a specific phase (R, S, T) of the power supply (10).

7. Electrical booster heating system according to claim 6, **characterized in that** the phases of the at least three electrode sets (R1/S1; S2/T2; R3/T3) have a phase displacement (PV) of 60° or 120° with respect to one another.

8. Electrical booster heating system according to one of the preceding claims, **characterized in that**, in the spatial pairwise arrangement of two individual electrodes (E1 to E12), their center axes (M1; M2) have a distance of at least 100 mm to at most 1500 mm, preferably less than 400 mm, in the plan view of the glass melting tank (2).

9. Electrical booster heating system according to one of the preceding claims, **characterized by** the fact that at least one electrode device (E1/E2; E3/E4; E9/E10; E5/E6; E7/E8 E11/E12) of a further electrode set (R1/S1; S2/T2; R3/T3) is arranged along a course of the boundary wall (3; 4) of the glass melting tank (2) between two electrode devices (E1/E2; E3/E4; E9/E10; E5/E6; E7/E8 E11/E12) of one of the electrode sets (R1/S1; S2/T2; R3/T3).

10. Electrical booster heating system according to one of the preceding claims, **characterized in that**, in a plan view, a geometrically shortest possible current path (L1, L2, L3) through the glass melt (2B), which is formed by the electrode devices (E1/E2; E3/E4; E9/E10; E5/E6; E7/E8 E11/E12) of one of the electrode sets (R1/S1; S2/T2; R3/T3 , the electrode devices (E1/E2; E3/E4; E9/E10; E5/E6; E7/E8 E11/E12) of which are arranged diagonally on one of the side walls (4) and on one of the longitudinal walls (3) of the glass melting tank (2), crosses a longitudinal center plane (7) or a transverse center plane (8) of the glass melting tank (2).

11. Electrical booster heating system according to one of the preceding claims, **characterized in that** the power supplies (Q1, Q2, Q3) for the sets of electrodes (E1/E2; E3/E4; E9/E10; E5/E6; E7/E8 E11/E12) are in each case single-phase transformers.

12. Electrical booster heating system according to one of the preceding claims, **characterized in that** at least one of the individual electrodes (E1 to E12) of one of the further electrode sets (E1/E2; E3/E4; E9/E10; E5/E6; E7/E8 E11/E12) is arranged along the boundary wall (3) of the glass melting tank (2), between two individual electrodes (E1 to E12) of one of the electrode devices (E1/E2; E3/E4; E9/E10; E5/E6; E7/E8 E11/E12) of one of the electrode sets (R1/S1; S2/T2; R3/T3).

13. Electrical booster heating system according to one of the preceding claims, **characterized in that** the individual electrodes (E1 to E12) of one of the electrode devices (E1/E2; E3/E4; E9/E10; E5/E6; E7/E8 E11/E12) are arranged at different heights, as viewed in a vertical direction (V), and offset from one another by a horizontal distance (A_{H}), as viewed in a horizontal direction (H), and in particular arranged one above the other in alignment, as viewed in the vertical direction (V).

14. Electrical booster heating system according to one of the preceding claims, **characterized in that** the individual electrodes (E1 to E12) of one of the electrode devices (E1/E2; E3/E4; E9/E10; E5/E6; E7/E8 E11/E12) are arranged at the same height, as seen in the vertical direction (V).

15. Electrical booster heating system according to one of the preceding claims, **characterized in that** individual electrodes (E1 to E12) or electrode devices (E1/E2; E3/E4; E5/E6; E7/E8 E9/E10; E11/E12), that are located adjacent to each other and that are member of different electric circuits are connected via the transformers (9) to the same phase (R, S, T) of the power grid plant.
